(19) Europäisches Patentamt
European Patent Office
Office européen des brevets

(11) **EP 1 798 065 B1**

(12) **EUROPÄISCHE PATENTSCHRIFT**

(45) Veröffentlichungstag und Bekanntmachung des Hinweises auf die Patenterteilung:
**03.12.2008 Patentblatt 2008/49**

(51) Int Cl.:
***B60C 11/12*** *(2006.01)*     ***B60C 11/11*** *(2006.01)*

(21) Anmeldenummer: **06123499.3**

(22) Anmeldetag: **06.11.2006**

(54) **Laufstreifenprofil eines Fahrzeugluftreifens mit Feineinschnitten**

Tread pattern of a tire comprising sipes

Profil de bande de roulement de pneumatiques avec lamelles

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **19.12.2005 DE 102005061119**

(43) Veröffentlichungstag der Anmeldung:
**20.06.2007 Patentblatt 2007/25**

(73) Patentinhaber: **Continental Aktiengesellschaft 30165 Hannover (DE)**

(72) Erfinder:
• **Diensthuber, Franz 30167 Hannover (DE)**
• **Heine, Stefan 30163 Hannover (DE)**
• **Seng, Matthias 30449 Hannover (DE)**
• **Celik, Akif 30419 Hannover (DE)**

(56) Entgegenhaltungen:
EP-A- 1 693 230     EP-A2- 1 080 949
AT-B- 402 181     JP-A- 8 216 627

## Beschreibung

Die Erfindung betrifft ein Laufstreifenprofil eines Fahrzeugluftreifens - insbesondere eines Winterreifens - mit wenigstens einer über den Umfang des Fahrzeugluftreifens erstreckten Profilblockreihe mit in Umfangsrichtung U hintereinander angeordneten, jeweils durch Querrillen voneinander getrennten Profilblockelementen mit einem in der radial äußeren Oberfläche von Profilblockelementen der Profilblockreihe ausgebildeten gitterförmigen Feineinschnittsystem.

Es sind Laufstreifenprofile von Winterreifen bekannt mit über den Umfang des Fahrzeugluftreifens erstreckten Profilblockreihe mit in Umfangsrichtung U hintereinander angeordneten, jeweils durch Querrillen voneinander getrennten Profilblockelementen mit in der radial äußeren Oberfläche von Profilblockelementen der Profilblockreihe ausgebildeten parallelen geradlinigen oder sinusförmig gewellten Feineinschnitten. Diese Ausbildung ermöglichen durch eine sehr begrenzte Zahl von parallelen Feineinschnitte Griffkanten für guten Schneegriff und Flexibilität des Profilblockes hauptsächlich in eine Richtung.

Darüber hinaus sind Laufstreifenprofile von Winterreifen bekannt mit über den Umfang des Fahrzeugluftreifens erstreckten Profilblockreihe mit in Umfangsrichtung U hintereinander angeordneten, jeweils durch Querrillen voneinander getrennten Profilblockelementen bekannt, bei denen in der radial äußeren Oberfläche der Profilblockelementen der Profilblockreihe gitterförmigen Feineinschnittsysteme, die sich jeweils über das gesamte Profilblockelement erstrecken, bekannt. Die Feineinschnittgitter ermöglichen eine hohe Griffkantenzahl und eine hohe Flexibilität der vom Feineinschnittgitter umrahmten Profilblockausschnittselemente für einen guten Schneegriff in Längs- und in Querrichtung. Die durch diese Feineinschnittsgitter einhergehende hohe Flexibilität des gesamten Profilblockelements kann jedoch zu hoher Klotzverformung führen, wodurch alle Trockeneigenschaften wie z.B. Traktions-, Handling- und auch Aquaplaningeigenschaften negativ beeinflusst werden können.

Aus der AT 402 181 B ist ein Laufstreifenprofil eines Fahrzeugluftreifens gemäß den Merkmalen des Oberbegriffs des Anspruchs 1 bekannt. Der bekannte Reifen weist erste Profilblockreihen, die nahe der Reifenmitte angeordnet sind, auf, deren Profilblockelemente jeweils durch eine schmale Querrille voneinander getrennt sind. Die benachbarte zur Reifenschulter weisende Profilblockreihe ist mit Profilblockelementen ausgebildet, die jeweils durch eine breite Querrille voneinander getrennt sind. Jedem Profilblockelement der ersten Profilblockreihe ist genau ein Profilblockelement der zweiten Profilblockreihe zugeordnet und umgekehrt. Jeder schmalen Querrille der ersten Profilblockreihe ist eine breite Profilblockreihe der zweiten Profilblockreihe zugeordnet. Hierdurch wird bei beschränktem Wasserabfluss die Umfangssteifigkeit der zweiten Profilblockreihe reduziert und somit Trocken- und Aquaplaningeigenschaften beschränkt. Werden die Profilblockelemente der Profilblockreihen nur sehr kurz ausgebildet, wird zwar der Wasserabfluss verbessert, jedoch die Umfangssteifigkeit wird weiter reduziert. Werden die Profilblockelemente der beiden Profilblockreihen länger ausgebildet, wird zwar die Umfangssteifigkeit erhöht, jedoch der Wasserabfluss reduziert, wobei dennoch die gleichbleibend breiten Rillen einer Einschränkung der Umfangssteifigkeit bedingen.

Der Erfindung liegt daher die Aufgabe zugrunde, ein Laufstreifenprofil eines Fahrzeugluftreifens - insbesondere eines Winterreifens - mit wenigstens einer über den Umfang des Fahrzeugluftreifens erstreckten Profilblockreihe mit in Umfangsrichtung U hintereinander angeordneten, jeweils durch Querrillen voneinander getrennten Profilblockelementen zu ermögliche, bei dem die großen Vorteile eines gitterförmigen Feineinschnittsystems mit Verbesserung der Trockeneigenschaften des Fahrzeugreifens verbunden werden können.

Erfindungsgemäß gelöst wird die Aufgabe durch die Ausbildung eines Laufstreifenprofil eines Fahrzeugluftreifens - insbesondere eines Winterreifens - mit wenigstens einer über den Umfang des Fahrzeugluftreifens erstreckten Profilblockreihe mit in Umfangsrichtung U hintereinander angeordneten, jeweils durch Querrillen voneinander getrennten Profilblockelementen gemäß den Merkmalen von Anspruch 1 mit einem in der radial äußeren Oberfläche von Profilblockelementen der Profilblockreihe ausgebildeten gitterförmigen Feineinschnittsystem, mit zwei in der radial äußeren Oberfläche des Profilblockelements ausgebildeten Zonen, die sich axial längs der Erstreckung des gitterförmigen Feineinschnittsystems über die gesamte axiale Erstreckung des gitterförmigen Feineinschnittsystems im Profilblockelement und in Umfangsrichtung zwischen jeweils einer der beiden das Profilblockelement in Umfangsrichtung zu einer Querrille hin begrenzenden Profilblockelementflanke und dem gitterförmigen Feineinschnittsystem über einen in Umfangsrichtung gemessenen Abstand w mit w > 0 mm hin erstrecken, der frei von Feineinschnitten ausgebildet ist, wobei in Umfangsrichtung (U) des Fahrzeugluftreifens gesehen jeweils zwei hintereinander angeordnete Profilblockelemente einer ersten Profilblockreihe in ihrer Umfangserstreckung einem Profilblockelement einer zweiten Profilblockreihe zugeordnet sind, wobei in der ersten Profilblockreihe in Umfangsrichtung (U) jeweils in alternierender Reihenfolge eine erste Querrille und eine zweite Querrille der ersten Profilblockreihe ausgebildet ist, wobei die erste Querrille in ihrer axialen Verlängerung in eine in der zweiten Profilblockreihe ausgebildeten Querrille übergeht, wobei die erste Querrille mit einer senkrecht zu ihrer Erstreckungsrichtung gemessenen Breite - insbesondere konstanten Breite - d und die zweite Querrille mit einer senkrecht zu ihrer Erstreckungsrichtung gemessenen Breite - insbesondere konstanten Breite - e ausgebildet ist, wobei für d und e in der radial äußeren Oberfläche des Fahrzeugluftreifens gilt: $(0,3\,d) \leq e \leq (0,95\,d)$.

Durch die feineinschnittfreien Randzonen sind die Profilblockelemente im für die Trockeneigenschaften wichtigen Randbereich versteift, wobei Feineinschnittgitter im innern der Profilblockelements die hohe Dichte und Zahl von Griffkanten und Flexibilität der durch das Feineinschnittgitter umrahmten Profilblockausschnittelemente zum sicheren Griff auf Schnee und schneeähnlichem Untergrund sowohl in axialer als auch in Umfangsrichtung des Fahrzeugluftreifens ermöglicht. Durch die Ausbildung, bei der in Umfangsrichtung (U) des Fahrzeugluftreifens gesehen jeweils zwei hintereinander angeordnete Profilblockelemente einer ersten Profilblockreihe in ihrer Umfangserstreckung einem Profilblokkelement einer zweiten Profilblockreihe zugeordnet sind, wobei in der ersten Profilblockreihe in Umfangsrichtung (U) jeweils in alternierender Reihenfolge eine erste Querrille und eine zweite Querrille der ersten Profilblockreihe ausgebildet ist, wobei die erste Querrille in ihrer axialen Verlängerung in eine in der zweiten Profilblockreihe ausgebildeten Querrille übergeht, wobei die erste Querrille mit einer senkrecht zu ihrer Erstreckungsrichtung gemessenen Breite - insbesondere konstanten Breite - d und die zweite Querrille mit einer senkrecht zu ihrer Erstreckungsrichtung gemessenen Breite - insbesondere konstanten Breite - e ausgebildet ist, wobei für d und e in der radial äußeren Oberfläche des Fahrzeugluftreifens gilt: $(0,3\ d) \leq e \leq (0,95\ d)$, wird eine hohe Umfangssteifigkeit bei hoher Wasserableitbarkeit aus dem Profil und somit gute Handlingeigenschaften und Aquaplaningeigenschaften ermöglicht. Die Ausbildung ermöglicht somit gute Trockeneigenschaften wie z.B.. Traktions- und Handlingeigenschaften und gute Aquaplaningeigenschaften.

Besonders vorteilhaft ist eine Ausbildung eines Laufstreifenprofils gemäß den Merkmalen von Anspruch 2, wobei sich das gitterförmige Feineinschnittsystem eines Profilblockelements jeweils über die gesamte axiale Erstreckung des Profilblockelements im Umfangserstreckungsbereich des gitterförmigen Feineinschnittsystems innerhalb der axialen Erstreckungsbreite TA der Bodenaufstandsfläche des Fahrzeugluftreifens im montierten, belasteten Betriebszustand unter Normbedingungen (gemäß E.T.R.T.O. Standards) erstreckt. Hierdurch können Schnee- und Eisgriff verbessert werden.

Besonders vorteilhaft ist eine Ausbildung eines Laufstreifenprofils gemäß den Merkmalen von Anspruch 3, wobei ein oder mehrere der Profilblockelemente einer Profilblockrehe in ihrer radial äußeren Oberfläche mit mehreren - insbesondere mit zwei - in Umfangsrichtung hintereinander angeordnet und von einander beabstandeten gitterförmigen Feineinschnittsystemen ausgebildet sind, mit jeweils einer in Umfangsrichtung zwischen den hintereinander angeordneten gitterförmigen Feineinschnittsystemen ausgebildeten Zone, die sich axial längs der Erstreckung des gitterförmigen Feineinschnittsysteme über die gesamte axiale Erstreckung der gitterförmigen Feineinschnittsysteme im Profilblockelement über einen in Umfangsrichtung gemessenen Abstand w mit w > 0 mm hin erstrecken, der frei von Feineinschnitten ausgebildet ist. Hierdurch kann der Zielkonflikt aus guten Handlingeigenschaften, Trockenbremsen und guten Wintereigenschaften besser gelöst werden.

Besonders vorteilhaft ist eine Ausbildung eines Laufstreifenprofils gemäß den Merkmalen von Anspruch 4, mit mehreren zwischen einer Reifenschulter und der Äquatorebene des Fahrzeugluftreifens jeweils über den Umfang des Fahrzeugluftreifens erstreckten Profilblockreihen mit in Umfangsrichtung U hintereinander angeordneten, jeweils durch Querrillen voneinander getrennten Profilblockelementen, bei denen jeweils in der radial äußeren Oberfläche von Profilblockelementen jeder dieser Profilblockreihen ausgebildetem gitterförmigen Feineinschnittsystemen und derartige von Feineinschnitten freien Zonen ausgebildet sind, wobei innerhalb der axialen Erstreckungsbreite TA der Bodenaufstandsfläche des Fahrzeugluftreifens im montierten, belasteten Betriebszustand unter Normbedingungen (gemäß E.T.R.T.O. Standards) die Fläche der von Feineinschnitten jeweils freien Zonen in der axial der Reifenschulter nächstgelegenen Profilblockreihe größer als die Fläche der von Feineinschnitten freien Zonen in der axial von der Reifenschulter axial am weitest entfernt gelegenen Profilblockreihe ausgebildet ist. Hierdurch können die Handlingeigenschaften und die Aquaplaningeigenschaften positiv beeinflusst werden.

Besonders vorteilhaft ist eine Ausbildung eines Laufstreifenprofils gemäß den Merkmalen von Anspruch 5, mit mehreren zwischen einer Reifenschulter und der Äquatorebene des Fahrzeugluftreifens jeweils über den Umfang des Fahrzeugluftreifens erstreckten Profilblockreihen mit in Umfangsrichtung U hintereinander angeordneten, jeweils durch Querrillen voneinander getrennten Profilblockelementen, bei denen jeweils in der radial äußeren Oberfläche von Profilblockelementen jeder dieser Profilblockreihen ausgebildetem gitterförmigen Feineinschnittsystemen und derartige von Feineinschnitten freien Zonen ausgebildet sind, wobei innerhalb der axialen Erstreckungsbreite TA der Bodenaufstandsfläche des Fahrzeugluftreifens im montierten, belasteten Betriebszustand unter Normbedingungen (gemäß E.T.R.T.O. Standards) die Fläche der von Feineinschnitten jeweils freien Zonen in einer axial der Reifenschulter näher gelegenen ersten Profilblockreihe jeweils größer als die Fläche der von Feineinschnitten freien Zonen in der axial weiter innen liegenden zur ersten Profilblockreihe benachbarten Profilblockreihe ausgebildet ist. Hierdurch können die Handlingeigenschaften und die Aquaplaningeigenschaften positiv beeinflusst werden.

Besonders vorteilhaft ist eine Ausbildung eines Laufstreifenprofils gemäß den Merkmalen von Anspruch 6, wobei die erste Profilblockreihe eine Schulterprofilblockreihe ist, wobei die zweite Profilblockreihe eine axial zur Schulterprofilblockreihe unmittelbar benachbarte von der Schulterprofilblockreihe durch eine über den gesamten Umfang des Fahrzeugluftreifens erstreckt ausgebildete Umfangsrille axial beabstandete Profilblockreihe ist. Hierdurch können die Handlingeigenschaften und die Aquaplaningeigenschaften positiv beeinflusst werden.

Besonders vorteilhaft ist eine Ausbildung eines Laufstreifenprofils gemäß den Merkmalen von Anspruch 7, wobei die feineinschnittsfreien Zonen der Profilblockelemente der ersten Profilblockreihe eine Fläche $F_C$ innerhalb der axialen Erstreckungsbreite TA der Bodenaufstandsfläche des Fahrzeugluftreifens im montierten, belasteten Betriebszustand unter Normbedingungen (gemäß E.T.R.T.O. Standards) und die feineinschnittsfreien Zonen der Profilblockelemente der zweiten Profilblockreihe eine Fläche $F_D$ aufweisen, wobei für $F_C$ und $F_D$ gilt: $(0,9\,F_C) < F_D < (1,7\,F_C)$. Hierdurch kann eine optimal abgestimmte Steifigkeit für Aquaplaning, Trockenbremsen und Abrieb erzielt werden.

Besonders vorteilhaft ist eine Ausbildung eines Laufstreifenprofils gemäß den Merkmalen von Anspruch 8, wobei innerhalb der axialen Erstreckungsbreite TA der Bodenaufstandsfläche des Fahrzeugluftreifens im montierten, belasteten Betriebszustand unter Normbedingungen (gemäß E.T.R.T.O. Standards) die axiale Erstreckungsbreite der axial zur außen zur Reifenschulter hin ausgebildeten Profilblockreihe größer als die axiale Erstreckungsbreite der axial weiter von der Reifenschulter entfernt angeordneten Profilblockreihe ist. Hierdurch können die Handlingeigenschaften positiv beeinflusst werden.

Besonders vorteilhaft ist eine Ausbildung eines Laufstreifenprofils gemäß den Merkmalen von Anspruch 9, wobei benachbart zur zweiten Profilblockreihe in axial von der ersten Profilblockreihe wegweisenden Richtung eine über den Umfang des Fahrzeugluftreifens erstreckt ausgebildete Profilrippe (9) ausgebildet ist, die an ihrer radial äußeren Oberfläche insbesondere mit einem gitterförmigen Feineinschnittsystem ausgebildet ist. Hierdurch können die Handlingeigenschaften und die Trockenbremseigenschaften positiv beeinflusst werden.

Besonders vorteilhaft ist eine Ausbildung eines Laufstreifenprofils gemäß den Merkmalen von Anspruch 10, wobei innerhalb der axialen Erstreckungsbreite TA der Bodenaufstandsfläche des Fahrzeugluftreifens im montierten, belasteten Betriebszustand unter Normbedingungen (gemäß E.T.R.T.O. Standards) für die axiale Erstreckungsbreite C der ersten Profilblockreihe, für die axiale Erstreckungsbreite D der zweiten Profilblockreihe und für die axiale Erstreckungsbreite B der Profilrippe (9) gilt:

D > C > B. Dies ermöglicht eine optimale Steifigkeitsverteilung in Querrichtung des Fahrzeugluftreifens im Zielkonflikt aus Handlingeigenschaften auf trockener Oberfläche gegenüber Laufleistung des Fahrzeugluftreifens. Durch Ausbildung mit B ≤ (0,18 TA) kann ermöglicht werden, dass die Mittenrippe im Aquaplaningfall wie ein Schiffsbug den Wasserfilm auch bei hohem Schlupf noch wirksam durchschneidet.

Besonders vorteilhaft ist eine Ausbildung eines Laufstreifenprofils gemäß den Merkmalen von Anspruch 11, wobei zwischen den Profilblockelementen der zweiten Profilblockreihe und der Profilrippe ein erster Rillenabschnitt (16') einer Rille ausgebildet ist, der die Profilrippe axial vom Profilblockelement trennt, der unter Einschluss eines Winkels (γ) zur Axialen des Fahrzeugluftreifens erstreckt verlaufend ausgebildet ist, und unter Ausbildung eines Knickes in axiale Richtung zu der eine Schulterprofilblockreihe bildenden ersten Profilblockreihe in einen zweiten Rillenabschnitt (16") der Rille übergeht, der das Profilblockelement von dem in Umfangsrichtung nach geordneten Profilblockelement der Profilblockreihe trennt, wobei der zweiten Rillenabschnitt (16") der Rille unter Einschluss eines Winkels (β) zur Axialen des Fahrzeugluftreifens erstreckt verlaufend ausgebildet ist. Hierdurch können die Handlingeigenschaften und die Aquaplaningeigenschaften positiv beeinflusst werden.

Besonders vorteilhaft ist eine Ausbildung eines Laufstreifenprofils gemäß den Merkmalen von Anspruch 12, wobei die erste eine Schulterprofilblockreihe bildende Profilblockreihe (3) und die axial benachbarte zweite Profilblockreihe (8) durch eine in Umfangrichtung (U) des Fahrzeugluftreifens über den gesamten Umfang des Fahrzeugluftreifens erstreckt ausgebildete Umfangsrille (4) axial getrennt ist, wobei die Umfangsrille (4) mit einem in Umfangsrichtung zickzack-förmigem Verlauf ausgebildet ist. Hierdurch können die Schneegriffeigenschaften und die Aquaplaningeigenschaften positiv beeinflusst werden.

Besonders vorteilhaft ist eine Ausbildung eines Laufstreifenprofils gemäß den Merkmalen von Anspruch 13, wobei der erste Rillenabschnitt (16') der Rille (16) in ihrer senkrecht zu ihrer Erstreckungsrichtung gemessenen Breite ausgehend von einer Breite a längs ihrer Erstreckung bis zu einer Breite b an der Knickstelle - insbesondere linear - zunimmt, wobei der zweite Rillenabschnitt (16") der Rille (16) in ihrer senkrecht zu ihrer Erstreckungsrichtung gemessenen Breite mit konstanter Breite b längs ihrer Erstreckung ausgebildet ist, wobei für die Breiten a, b und c gilt: a < b ≤ c, wobei insbesondere (1,2 a) ≤ b ≤ (2,3 a). Hierdurch kann die Drainage aus dem Profilinnern optimiert werden.

Besonders vorteilhaft ist eine Ausbildung eines Laufstreifenprofils gemäß den Merkmalen von Anspruch 14, wobei das Laufstreifenprofil laufrichtungsgebunden ausgebildet ist. Hierdurch können die Handlingeigenschaften, die Aquaplaningeigenschaften, Schnee- und Eisgriff positiv beeinflusst werden.

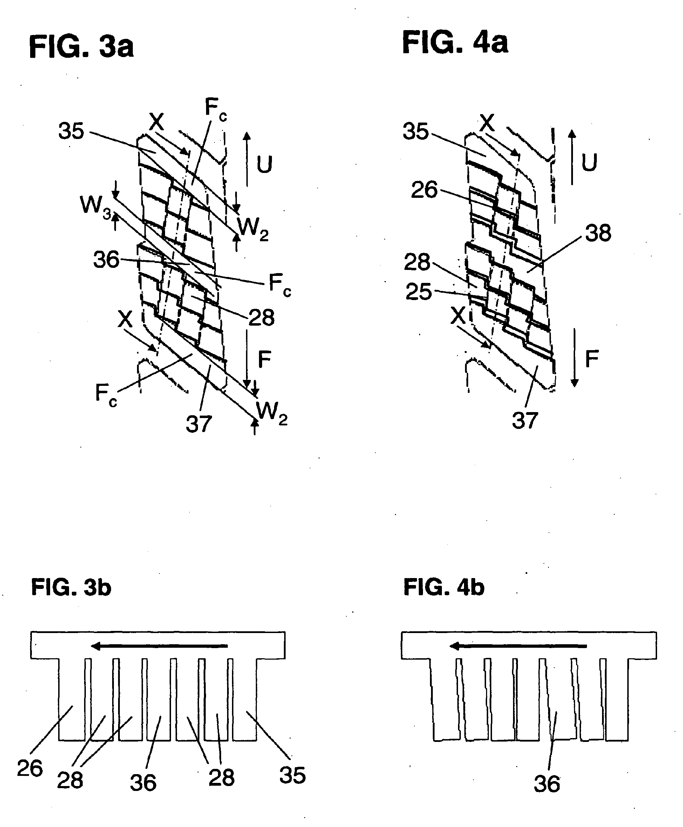

Die Erfindung wird im Folgenden an Hand der in den Figuren 1 bis 4 dargestellten Ausführungsbeispiele näher erläutert. Darin zeigen

Fig. 1 Fahrzeugluftreifen mit Laufflächenprofil in perspektivischer Darstellung,

Fig. 2 Draufsicht auf einen Umfangsausschnitt des Laufstreifenprofils von Fig. 1,

Fig. 3a Vergrößertes Profilblockelement zur Erläuterung des erfindungsgemäß ausgebildeten Feineinschnittgitters im unbelasteten Zustand,

Fig. 3b Profilblockelement von Fig. 3 a in Schnittdarstellung X-X von Fig. 3a,

Fig. 4a Vergrößertes Profilblockelement von Fig. 3a zur Erläuterung des Gleiteffektes im Feineinschnittgitter im belasteten Zustand beim Durchlaufen des Reifenlatsches

Fig. 4b Profilblockelement von Fig. 4 a in Schnittdarstellung X-X von Fig. 4a .

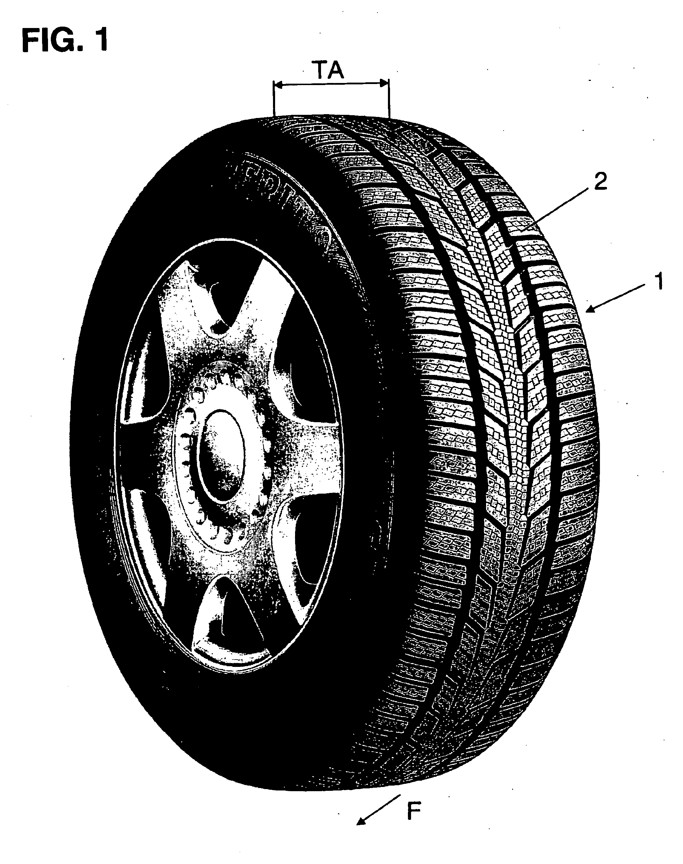

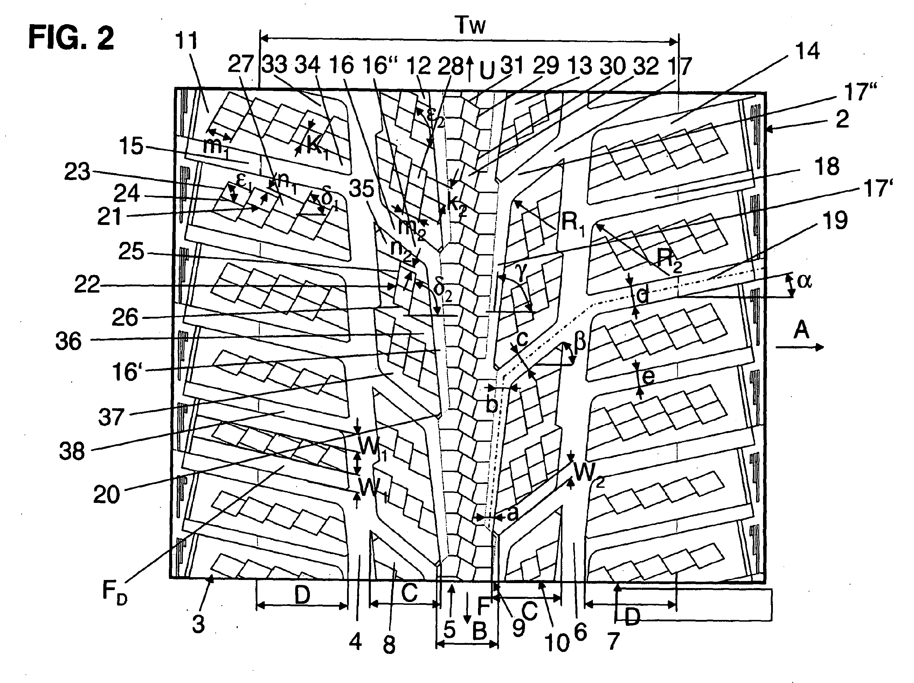

Der in Fig. 1 und 2 dargestellte Fahrzeugluftreifen 1 ist insbesondere als Radialreifen ausgeführt und vorzugsweise ein PKW-Reifen oder ein Reifen für leichte Nutzfahrzeuge. Der Fahrzeugluftreifen ist mit einem Laufstreifenprofil 2 versehen, welches für den Einsatz unter winterlichen Fahrbedingungen besonders geeignet ist. In der folgenden Beschreibung wird das Laufstreifenprofil 2 über seine Breite TA betrachtet, die der Latschbreite und somit der Breite der Bodenaufstandsfläche des Fahrzeugluftreifens im montierten, belasteten Betriebszustand unter Normbedingungen (gemäß E.T.R.T.O. Standards) entspricht.

In Fig.2 ist die axiale Richtung A des Fahrzeugluftreifens mit Pfeildarstellung eingetragen. Ebenso ist die Umfangsrichtung U des Fahrzeugluftreifens mit Pfeildarstellung angegeben.

Bei dem in Fig.2 dargestellten Laufstreifenprofil 2 handelt es sich um ein laufrichtungsgebunden gestaltetes Profil. Das heißt, dass Reifen mit diesem Profil eine bevorzugte Abrollrichtung besitzen, die in Fig. 1 und 2 durch den Pfeil F angedeutet ist, der entgegen der in Fig. 2 mit Pfeil eingetragenen Umfangsrichtung U weist, und dass solche Reifen daher auch entsprechend ihrer Abrollrichtung am Fahrzeug zu montieren sind.

Wie in Fig. 2 zu erkennen ist, ist das Laufstreifenprofil 2 in axialer Richtung ausgehend von der linken Reifenschulter zur rechten Reifenschulter hin aus einer linken Schulterprofilblockreihe 3, einer Umfangsrille 4, einem Mittenprofilband 5, einer Umfangsrille 6 und einer rechten Schulterprofilblockreihe 7 ausgebildet, die sich jeweils in Umfangsrichtung U über den gesamten Umfang des Fahrzeugluftreifens hin erstrecken. Die linke Schulterprofilblockreihe 3 ist in axialer Richtung vom Mittenprofilband 5 axial durch die Umfangsrille 4 und das Mittenprofilband 5 von der rechten Schulterprofilblockreihe 7 durch die Umfangsrille 6 axial getrennt.

Die linke Schulterprofilblockreihe 3 erstreckt sich ebenso wie die rechte Schulterprofilblockreihe 7 über den gesamten Umfang des Fahrzeugluftreifens in Umfangsrichtung U und ist in jeweils aus einer Vielzahl von in Umfangsrichtung U hintereinander angeordneten Profilblockelementen 11 bzw. 14 ausgebildet. Dabei sind die in Umfangsrichtung U hintereinander angeordneten Profilblockelemente 11 der Schulterprofilblockreihe 3 in Umfangsrichtung U in alternierender Reihenfolge durch Querrillen 15 bzw. durch Querrillen 38 voneinander getrennt. Die in Umfangsrichtung U hintereinander angeordneten Profilblockelemente 14 der Schulterprofilblockreihe 7 in Umfangsrichtung U in alternierender Reihenfolge durch Querrillen 19 bzw. durch Querrillen 18 voneinander getrennt.

Das Mittenprofilband 5 ist aus einer zentralen über den Umfang des Fahrzeugluftreifens in Umfangsrichtung U ausgerichtet erstreckten Profilrippe 9 ausgebildet, deren axiale Flanken im wesentlichen aus über den Umfang des Fahrzeugluftreifens verteilten ersten Umfangsabschnitten ausgebildet sind, die in der entgegen der Abrollrichtung F eingetragenen Umfangsrichtung U gesehen unter Einschluss eines Neigungswinkels zur Axialen A von der Profilrippe 9 axial wegweisend nach außen zu der jeweiligen Reifenschulter hin geneigt verlaufen und zwischen denen jeweils in Umfangsrichtung gegenüber den ersten Umfangsabschnitten deutlich kürzere zweite Umfangsabschnitte ausgebildet sind, in denen die jeweilige Flanke einen axial gegenläufig steigend verlaufenden Versatzabschnitt in axialer Richtung zur Rippenmitte der Profilrippe 9 hin mit einem deutlich kleineren Neigungswinkel zur Axialen A aufweisen. Die Umfangspositionen des axialen Versatzes auf der rechts dargestellten Rippenflanke der Profilrippe 9 sind gegenüber den Umfangspositionen des axialen Versatzes auf der linken Rippenflanke der Profilrippe 9 in Umfangsrichtung des Fahrzeugluftreifens versetzt zu einander ausgebildet. Ausgehend von den den axialen Versatz darstellenden kurzen Umfangsabschnitten mit axial nach innen zur Profilrippenmitte hin steigend verlaufenden Abschnitts der jeweiligen Rippenflanke der Profilrippe 9 sind jeweils Profilblockelemente 12 bzw. Profilblockelemente 13 ausgebildet, die sich von der Position des kurzen Versatzes in die entgegen der Abrollrichtung F eingetragene Umfangsrichtung U gesehen und von der Profilrippe 9 weg weisend nach axial außen erstrecken, wobei sich die Profilblockelemente 12 von der Profilrippe 9 ausgehend in Richtung der Schulterprofilblockreihe 3 und die Profilblockelemente 13 in Richtung der Schulterprofilblockreihe 14 erstrecken. Die in Umfangsrichtung U des Fahrzeugluftreifens hintereinander angeordneten Profilblockelemente 12 bilden in Umfangsrichtung U des Fahrzeugluftreifens gesehen eine über den Versatz an die Profilrippe 9 angelehnte Profilblockreihe 8. Die Profilblockelemente 13 bilden in Umfangsrichtung U des Fahrzeugluftreifens gesehen eine über den Versatz an die Profilrippe 9 angelehnte Profilblockreihe 10.

Jedes Profilblockelement 12 ist längs seiner Erstreckung in Umfangsrichtung U ausgehend von der Position des jeweiligen kurzen Versatzes von der Profilrippe 9 längs eines ersten Umfangsabschnitts der Profilrippe 9 durch einen ersten Erstreckungsbereich 16' einer Rille 16 axial getrennt., der an dem vom kurzen Versatz gegenüberliegenden Ende des Erstreckungsbereichs des ersten Umfangsabschnitts der Profilrippe 9 unter Ausbildung eines axial nach außen zur Schulterprofilblockreihe 3 hin gerichteten Knicks in einen zweiten Abschnitt 16" der Rille 16 übergeht, welcher das Profilblockelement 12 von dem in Umfangsrichtung U nächstliegenden nachfolgenden Profilblockelement 12 trennt. Ebenso ist jedes Profilblockelement 13 längs seiner Erstreckung in Umfangsrichtung U ausgehend von der Position des jeweiligen kurzen Versatzes von der Profilrippe 9 längs eines ersten Umfangsabschnitts der Profilrippe 9 durch einen ersten Erstreckungsbereich 17' einer Rille 17 axial getrennt., der an dem vom kurzen Versatz gegenüberliegenden Ende des Erstreckungsbereichs des ersten Umfangsabschnitts der Profilrippe 9 unter Ausbildung eines axial nach außen zur Schulterprofilblockreihe 7 hin gerichteten Knicks in einen zweiten Abschnitt 17" der Rille 17 übergeht, welcher das Profilblockelement 13 von dem in Umfangsrichtung U nächstliegenden nachfolgenden Profilblockelement 13 trennt.

In Umfangsrichtung U beginnt im Anschluss an die jeweilige Knickstelle zwischen Abschnitt 16' und Abschnitt 16" der Rille 16 bzw. des Abschnitts 17' und 17" der Rille 17 ein zweiter Umfangsabschnitt der Profilrippe 9, in dem diese mit ihrer jeweils zur Rille 16 bzw. zur Rille 17 ausgebildeten Rillenflanke mit dem nach axial innen gerichteten Versatz ausgebildet ist. Der Versatz bildet wiederum ein stumpfes Ende eines neuen Abschnitts 16' der Rille 16 bzw. des Abschnitts 17' der Rille 17, der vom Versatz in Umfangsrichtung U ausgehend das nächste Profilblockelement 12 bzw. 13 von der Profilrippe 9 trennt. Im Bereich des Versatzes ist dabei jeweils zwischen der Knickstelle im Übergang von Abschnitt 16' und Abschnitt 16" der einen Rille 16 bzw. von Abschnitt 17' und 17" der einen Rille 17 zum Abschnitts 16' der Versatz in Umfangsrichtung U nachfolgenden Rille 16 bzw. zum Abschnitts 17' der Versatz in Umfangsrichtung U nachfolgenden Rille 17 zwischen Flanke der Profilrippe im zweiten mit Versatz ausgebildeten Umfangserstreckungsabschnitt der Profilrippe 9 und dem in Umfangsrichtung U angrenzenden Profilblockelement 12 bzw. Profilblockelement 13 jeweils lediglich ein kleiner Entkopplungsspalt 20 ausgebildet. Die Spaltbreite ist einem Ausführungsbeispiel 1mm bis 2mm breit, beispielsweise 1 mm breit, gewählt. Der Spalt ist dabei höchstens dreimal so tief (in radialer Richtung) wie breit gewählt.

Die Rillen 16 und die Rillen 17 sind in ihrem gesamten Erstreckungsbereicht 16' bzw. 17' jeweils geradlinig verlaufend, jedoch in der dargestellten Umfangsrichtung U mit kontinuierlich zunehmender Breite der Rille ausgehend von einer Breite a bis zu einer Breite b ausgebildet, wobei die Breite der Rillen jeweils senkrecht zu ihrer Erstreckungsrichtung und in der radial äußeren Kontaktfläche des Reifens zur Straßenoberfläche gemessen wird. In Fig. 2 ist am Beispiel des Abschnitts 17' einer Rille 17" die Breite a am Beginn des Abschnitts 17' und die Breite b am Ende des Abschnitts 17' eingetragen.

Die Rillen 16 bzw. die Rillen 17 erstreckt sich in ihrem Erstreckungsbereich 16" bzw. 17" ebenfalls mit einem geradlinigen Verlauf, sind in diesem Erstreckungsbereich jedoch mit einer konstanten Rillenbreite c ausgebildet, wobei $c \geq b > a$.

Die Breiten a und b sind derart gewählt, dass für a und b gilt: $(1{,}2\,a) < b < (2{,}3\,a)$

In ihrer axialen Verlängerung über die Umfangsrille 4 hinweg geht jede Rille 16 jeweils in eine Querrille 15 der Profilblockreihe 3 über. Ebenso geht in ihrer axialen Verlängerung über die Umfangsrille 6 hinweg jede Rille 17 jeweils in eine Querrille 19 der Profilblockreihe 7 über.

In axialer Richtung von der Profilrippe 9 ausgehend jeweils nach außen zu den Reifenschultern gesehen, schließen die Abschnitte 16' bzw. 17' der Rillen 16 und 17 mit ihrem Erstreckungsverlauf jeweils einen Steigungswinkel $\gamma$ zur Axialen A des Fahrzeugluftreifens, die Abschnitte 16" bzw. 17" der Rillen 16 und 17 schließen mit ihrem Erstrek- kungsverlauf jeweils einen Steigungswinkel $\beta$ zur Axialen A des Fahrzeugluftreifens ein und die Querrillen 15 und 19 der Schulterprofilblockreihe 3 bzw. 7 mit ihrem Erstreckungsverlauf jeweils einen Steigungswinkel $\alpha$ zur Axialen A des Fahrzeugluftreifens ein. Für die Steigungswinkel $\alpha$, $\beta$ und $\gamma$ gilt: $\gamma > \beta > \alpha$., wobei $90° \geq \gamma \geq 70°, 70° \geq \beta \geq 25°$ und $25° \geq \alpha \geq 5°$. In einer beispielhaften Ausführung sind die Steigungswinkel $\alpha$, $\beta$ und $\gamma$ wie folgt gewählt:

$$90° \geq \gamma \geq 80°, \; 50° \geq ß \geq 30° \text{ und } 20° \geq \alpha \geq 10°.$$

In einer beispielhaften Ausführung sind die Steigungswinkel $\alpha$, $\beta$ und $\gamma$ wie folgt gewählt: $\gamma=85°$, $\beta=45°$ und $\alpha=15°$.

Auf diese Weise bilden die Rillen 16 mit den Querrillen 15 und die Rillen 17 mit den Querrillen 19 einen V- förmigen Profilverlauf des Laufstreifenprofils 2 des Fahrzeugluftreifens aus.

Die Profilblockelemente 12 bzw. 13 sind an ihren die Profilrillen 16 bzw. 17 begrenzenden Profilblockelementflanken jeweils im abgeknickten Übergangsbereich zwischen den Rillenabschnitten 16' und 16" bzw. zwischen den Rillenabschnitten 17' zu 17" einen unter einem Krümmungsradius $R_1$ gekrümmten Flankenverlauf ausgebildet.

Die Profilblockelemente 11 der Profilblockreihe 3 sind an ihrer axial zur Umfangsrille 4 die Profilblockelemente 11 begrenzenden Flanke mit gleicher Neigungsrichtung zur axialen A wie der Flankenverlauf der Profilblockelemente 12 an ihrer den Rillenabschnitt 16' der Rillen 16 begrenzenden Flanke ausgebildet. In einer besonderen in Fig. 1 dargestellten Ausführung sind die Profilblockelemente 11 der Profilblockreihe 3 an ihrer axial zur Umfangsrille 4 die Profilblockelemente 11 begrenzenden Flanke mit einem parallel zum Flankenverlauf der Profilblockelemente 12 an ihrer den Rillenabschnitt 16' der Rillen 16 begrenzenden Flanke ausgebildet. Die Profilblockelemente 14 der Profilblockreihe 7 sind an ihrer axial zur Umfangsrille 6 die Profilblockelemente 14 begrenzenden Flanken mit gleicher Neigungsrichtung zur axialen A wie der Flankenverlauf der Profilblockelemente 13 an ihrer den Rillenabschnitt 17' der Rillen 17 begrenzenden Flanke ausgebildet. In einer besonderen in Fig. 1 dargestellten Ausführung sind die Profilblockelemente 14 der Profilblockreihe 7 an ihrer axial zur Umfangsrille 6 die Profilblockelemente 14 begrenzenden Flanken mit einem parallel zu dem Flankenverlauf der Profilblockelemente 13 an ihrer den Rillenabschnitt 17' der Rillen 17 begrenzenden Flanke ausgebildet.

Die ein Profilblockelement 11 zur Umfangsrille 4 hin jeweils begrenzende Flanke erstreckt sich in Umfangsrichtung U (entgegen der Abrollrichtung F) jeweils bis zur nächsten in Umfangsrichtung U das jeweilige Profilblockelement 11 begrenzenden Querrille 15 bzw. 38. Die ein Profilblockelement 14 zur Umfangsrille 6 hin jeweils begrenzende Flanke erstreckt sich in Umfangsrichtung U (entgegen der Abrollrichtung F) jeweils bis zur nächsten in Umfangsrichtung U das jeweilige Profilblockelement 14 begrenzenden Querrille 18 bzw. 19. In diesen Übergangsbereichen zwischen Umfangsrille 4 und Querrille 38 bzw. 15 sowie zwischen Umfangsrille 6 und Querrille 18 bzw. 19 ist das jeweilige Profilblockelement 11 bzw. 14 mit seinem Flankenverlauf mit einem Krümmungsradius $R_2$ gekrümmt ausgebildet.

Die Krümmungsradien $R_2$ und $R_1$ sind derart gewählt, dass für sie gilt: $R_2 \geq R_1$

Die Querrillen 38 enden in ihrer axialen Verlängerung zum Mittenprofilband 5 hin stumpf in der Umfangsrille 4. Ebenso enden die Querrillen 18 der Profilblockreihe 7 in ihrer axialen Verlängerung zum Mittenprofilband 5 hin stumpf in der Umfangsrille 6. Die Querrillen 38 sind in ihrer Erstreckungsrichtung geradlinig verlaufend und parallel zu den Querrillen 15 ausgebildet. Die Querrillen 18 sind ebenfalls in ihrer Erstreckungsrichtung geradlinig und parallel zu den Querrillen 19 verlaufend ausgebildet. Die Querrillen 38 bzw. 18 sind mit einer Breite e, die Querrillen 18 bzw. 15 sind mit einer Breite d ausgebildet, wobei die Breite der Rillen jeweils senkrecht zu ihrer Erstreckungsrichtung und in der radial äußeren Kontaktfläche des Reifens zur Straßenoberfläche gemessen wird Dabei gilt: c < d.
In einer besonderen Ausführung gilt darüber hinaus e < d, wobei (0,3 d) < e < (0,95 d).
Wie in Fig. 2 dargestellt, erstrecken sich die Profilblockelemente 33 der Schulterprofilblockreihe 3 in axialer Richtung innerhalb der Aufstandsbreite TA ausgehend vom in Fig. 2 links eingezeichneten Erstreckungsrand der Aufstandsbreite TA in axialer Richtung bis zur Umfangsrille 4 über eine maximale axiale Erstreckung der Breite D. Ebenso erstrecken sich die in Profilblockelemente 33 der Schulterprofilblockreihe 7 innerhalb der Aufstandsbreite TA ausgehend vom rechts eingetragenen Rand der Aufstandsbreite TA in axialer Richtung bis zur Umfangsrille 6 über eine maximale axiale Erstreckung der Breite D.
Die Profilblockelemente 12 sowie die Profilblockelemente 13 erstrecken sich in axialer Richtung jeweils über eine maximale axiale Erstreckung der Breite C. Die Profilrippe 5 erstreckt sich in axialer Richtung über eine maximale axiale Erstreckung der Breite B. Die axialen Breiten B, C und D sind die Breiten in der radial äußeren Mantelfläche des Fahrzeugluftreifens, die die Kontaktfläche zur Straßenoberfläche darstellt. Die axialen Breiten B, C und D entsprechen dabei jeweils den axialen Erstreckungsbreiten, die sich bei Projektion des jeweiligen Profilblockelements 11, 14, 12, 13 bzw. der Profilrippe 9 in Umfangsrichtung des Fahrzeugluftreifens ergibt.
Die Profilblockelemente 11 und 14 der Schulterprofilblockreihen 3 und 7, die Profilblockelemente 12 und 13 und die Profilrippe 9 sind dabei so ausgelegt, dass für die Breiten ihrer maximalen axialen Erstreckung gilt: D > C > B mit $B \leq (0,18 TA)$.
Die Profilblockelemente 11 der Schulterprofilblockreihe 3 sind ebenso wie die Profilblockelemente 14 der Schulterprofilblockreihe 7 jeweils mit einem Feineinschnittgitter 21 bestehend aus in dem jeweiligen Profilblockelement 11 bzw. 14 parallel zueinander ausgerichteten in axialer Richtung A des Fahrzeugluftreifens äquidistant beabstandeten Feineinschnitten 23 und aus ebenfalls innerhalb des Profilblockelementes 11 bzw. 14 jeweils parallel zueinander ausgerichteten Feineinschnitten 24 ausgebildet. Die Feineinschnitte 23 sind längs ihrer Erstreckung in Richtung der eingetragenen Umfangsrichtung U (d.h. entgegen der Abrollrichtung F) gesehen zusätzlich mit einer axialen Richtungskomponente in Richtung des Kronenbereichs des Fahrzeugluftreifens und somit zur Umfangsrippe 9 hin unter Einschluss eines Steigungswinkels $\delta_1$ zur Axialen A ausgebildet, wobei für $\delta_1$ gilt: $50° \leq \delta_1 \leq 85°$.
In besonderer Ausbildung gilt für $\delta_1$: $55° \leq \delta_1 \leq 80°$. Beispielsweise ist $\delta_1$, derart gewählt, dass $\delta_1 = 60°$. Die Feineinschnitte 24 schließen einen Steigungswinkel $\varepsilon_1$ zum Erstreckungsrichtung der Feineinschnitte 23 innerhalb eines Profilblockelementes 11 bzw. 14 ein, für den gilt: $30° \leq \varepsilon_1 \leq 150°$. In einer besonderen Ausführung gilt: $80° \leq \varepsilon_1 \leq 100°$. Der Winkel $\varepsilon_1$ ist dabei ausgehend vom Schnittpunkt des jeweiligen Feineinschnitts 24 mit dem Feineinschnitt 23 von der vom Schnittpunkt in Umfangsrichtung U weisenden Erstreckungsstrahl des Feineinschnittes 23 in Richtung der Umfangsprofilrippe 9 gedreht.
Wie in Fig. 2 dargestellt ist, ist in einer besonderen Ausführung $\varepsilon_1$ ein spitzer Winkel mit $75° \leq \varepsilon_1 \leq 85°$. Beispielsweise ist $\varepsilon_1$ derart ausgewählt, dass $\varepsilon_1 = 80°$.
Dabei sind die Feineinschnitte 24 derart im jeweiligen Profilblockelement 11 bzw. 14 angeordnet, dass jeder Feineinschnitt 23 mit seinem axial benachbarten Feineinschnitt 23 jeweils durch N Feineinschnitte 24 miteinander verbunden sind. Der in den Profilblockelementen 11 der Profilblockreihe 3 zur Umfangsrille 4 sowie der in den Profilblockelementen 14 der Profilblockreihe 7 zur Umfangsrille 6 hin jeweils nächstliegende Feineinschnitt 23 ist jeweils mit der entsprechend axial benachbarten Umfangsrille 4 bzw. 6 ebenfalls durch N Feineinschnitte 24 verbunden. Innerhalb eines Profilblockelementes 11 bzw. 14 sind die zwischen zwei benachbarten Feineinschnitten 23 bzw. zwischen dem der axial benachbarten Umfangsrille 4 bzw. 6 nächstliegenden Feineinschnitt 23 und der Umfangsrille 4 bzw. 6 jeweils ausgebildeten N Feineinschnitte 24 jeweils mit gleichem Abstand $k_1$ zu dem in Erstreckungsrichtung der Feineinschnitte 23 nächstliegenden Feineinschnitt 24 ausgebildet, wobei der Abstand $k_1$ in Erstreckungsrichtung der Feineinschnitte 23 des jeweiligen Profilblockelementes 11 bzw. 14 gemessen wird. Die benachbarten Feineinschnitte 23 eines Profilblockelementes 11 bzw. eines Profilblockelementes 14 sind innerhalb eines Profilblockelementes 11 bzw. 14 jeweils mit gleichem Abstand $m_1$ zueinander ausgebildet, wobei der Abstand $m_1$ in Erstreckungsrichtung der Feineinschnitte 24 des Profilblockelementes 11 bzw. 14 gemessen wird.

Für die Abstände $k_1$ und $m_1$ gilt: $k_1 < m_1$. In einer besonderen Ausführung gilt: $(1,2 m_1) \leq k_1 \leq (1,8 m_1)$. In einem Ausführungsbeispiel ist gewählt: $k_1 = (1,5 m_1)$.

Innerhalb eines Profilblockelements 11 bzw. 14 sind dabei die jeweils die von der axialen Innenseite des Fahrzeugluftreifens in einen Feineinschnitt 23 mündenden Feineinschnitte 21 gegenüber den von der axialen Außenseite des Fahrzeugluftreifens in den Feineinschnitt 23 mündenden Feineinschnitten 24 in Umfangsrichtung U, d.h. entgegen der Abrollrichtung F, gerichteter Sicht, um einen Abstand n versetzt, wobei das Maß $n_1$ in Richtung der Erstreckungs- richtung des jeweiligen Feineinschnitts 23 gemessen wird. Dabei gilt: $0 < n_1 < k_1$. In einer besonderen Ausführung gilt: $0 < n_1 \leq (0,4\, k_1)$. In einem Ausführungsbeispiel ist gewählt $n_1 = (0,25\, k_1)$

Jeder Feineinschnitt 23 des Feineinschnittgitters 21 ist dabei jeweils so ausgebildet, dass an dem in Umfangsrichtung U gesehenen Anfang als auch an dem in Umfangsrichtung U gesehenen Ende eines Feineinschnitts 23 jeweils ein Feineinschnitt 24 in den Feineinschnitt 23 mündet.

Die Feineinschnittgitter 21 bilden auf diese Weise ein Gitter aus von durch die Feineinschnitte 23 und 24 gebildeten Gitterlinien mit von den Gitterlinien jeweils umschlossenen Profilblockausschnittselementen 27.

Die Feineinschnittsgitter 21 sind dabei derart in den Profilblockelementen 11 bzw. 14 der Profilblockreihen 3 bzw. 7 angeordnet, dass in Umfangsrichtung U gesehen jeweils vor und hinter dem Feineinschnittsgitter ein feineinschnittsfreier über die gesamte axiale Erstreckung des Profilblockelements 11 bzw. 14 erstreckter Umfangsabschnitt 33 bzw. 34 des Profilblockelements 11 bzw. 14 der Umfangslänge $w_1$ mit $w_1 > 0\,mm$ mit einer lamellenfreier Fläche $F_D$ verbleibt, der das Feineinschnittgitter 21 in Umfangsrichtung von den das jeweilige Profilblockelement 11 bzw. 14 begrenzenden Querrillen 15 und 38 bzw. 18 und 19 trennt. In einer besonderen Ausführung gilt $(1,15\, k_1) \leq w_1 \leq (1,5\, k_1)$

Die Profilblockelemente 12 der Profilblockreihe 8 sind ebenso wie die Profilblockelemente 13 der Profilblockreihe 10 jeweils mit einem Feineinschnittgitter 22 bestehend aus in dem jeweiligen Profilblockelement 12 bzw. 13 parallel zueinander ausgerichteten in axialer Richtung A des Fahrzeugluftreifens äquidistant beabstandeten Feineinschnitten 25 und aus ebenfalls innerhalb des Profilblockelementes 12 bzw. 13 jeweils parallel zueinander ausgerichteten Feineinschnitten 26 ausgebildet. Die Feineinschnitte 25 sind längs ihrer Erstreckung in Richtung der eingetragenen Umfangsrichtung U (d.h. entgegen der Abrollrichtung F) gesehen zusätzlich mit einer axialen Richtungskomponente in Richtung des Kronenbereichs des Fahrzeugluftreifens und somit zur Umfangsrippe 9 hin unter Einschluss eines Stei- gungswinkels $\delta_2$ zur Axialen A ausgebildet, wobei für $\delta_2$ gilt: $50° \leq \delta_1 \leq 90°$

In besonderer Ausbildung gilt für $\delta_2$: $55° \leq \delta_2 \leq 85°$. Beispielsweise ist $\delta_2$ derart gewählt, dass $\delta_2 = 80°$. Die Feineinschnitte 26 schließen einen Steigungswinkel $\varepsilon_2$ zum Erstreckungsrichtung der Feineinschnitte 25 innerhalb eines Profilblockelementes 12 bzw. 13 ein, für den gilt: $30° \leq \varepsilon_2 \leq 150°$. In einer besonderen Ausführung gilt: $80° \leq \varepsilon_2 \leq 120°$. In einer Ausführung ist $\varepsilon_2$ beispielsweise mit $\varepsilon_2 = 115°$ gewählt. Der Winkel $\varepsilon_2$ ist dabei ausgehend vom Schnittpunkt des jeweiligen Feineinschnitts 26 mit dem Feineinschnitt 25 von der vom Schnittpunkt in Umfangsrichtung U weisenden Erstreckungsstrahl des Feineinschnittes 25 in Richtung der Umfangsprofilrippe 9 gedreht.

Dabei sind die Feineinschnitte 26 derart im jeweiligen Profilblockelement 12 bzw. 13 angeordnet, dass jeder Feineinschnitt 25 mit seinem axial benachbarten Feineinschnitt 25 jeweils durch N Feineinschnitte 26 miteinander verbunden sind. Der in den Profilblockelementen 12 der Profilblockreihe 8 jeweils zur Umfangsrille 4 und zum Rillenabschnitt 16' sowie der in den Profilblockelementen 13 der Profilblockreihe 10 jeweils zur Umfangsrille 6 und zum Rillenabschnitt 17' hin jeweils nächstliegende Feineinschnitt 25 ist jeweils mit der entsprechend axial benachbarten Umfangsrille 4, dem Rillenabschnitt 16', der Umfangsrille 6 bzw. dem Rillenabschnitt 17' ebenfalls durch N Feineinschnitte 26 verbunden. Innerhalb eines Profilblockelementes 12 bzw. 13 sind die zwischen zwei benachbarten Feineinschnitten 25 bzw. zwischen dem der axial benachbarten Umfangsrille 4, dem Rillenabschnitt 16', der Umfangsrille 6 bzw. dem Rillenabschnitt 17' nächstliegenden Feineinschnitt 25 und der Umfangsrille 4, dem Rillenabschnitt 16', der Umfangsrille 6 bzw. dem Rillenabschnitt 17' jeweils ausgebildeten N Feineinschnitte 26 jeweils mit gleichem Abstand $k_2$ zu dem in Erstreckungsrichtung der Feineinschnitte 25 nächstliegenden Feineinschnitt 26 ausgebildet, wobei der Abstand $k_2$ in Erstreckungsrichtung der Feineinschnitte 25 des jeweiligen Profilblockelementes 12 bzw. 13 gemessen wird. Die benachbarten Feineinschnitte 25 eines Profilblockelementes 12 bzw. eines Profilblockelementes 13 sind innerhalb eines Profilblockelementes 12 bzw. 13 jeweils mit gleichem Abstand $m_1$ zueinander ausgebildet, wobei der Abstand $m_2$ in Erstreckungsrichtung der Fein- einschnitte 26 des Profilblockelementes 12 bzw. 13 gemessen wird.

Für die Abstände $k_2$ und $m_2$ gilt: $k_2 \leq m_2$. In einer besonderen Ausführung gilt: $k_2 = m_2$.

Für die Abstände $k_2$ und $k_1$ gilt: $k_1 \leq k_2$. In einer besonderen Ausführung gilt: $k_1 \leq k_2 \leq (1,15\, k_1)$.

Innerhalb eines Profilblockelements 12 bzw. 13 sind dabei die jeweils die von der axialen Innenseite des Fahrzeugluftreifens in einen Feineinschnitt 25 mündenden Feineinschnitte 22 gegenüber den von der axialen Außenseite des Fahrzeugluftreifens in den Feineinschnitt 25 mündenden Feineinschnitten 26 in Umfangsrichtung U, d.h. entgegen der Abrollrichtung F, gerichteter Sicht, um einen Abstand $n_2$ versetzt, wobei das Maß $n_2$ in Richtung der Erstreckungs- richtung des jeweiligen Feineinschnitts 25 gemessen wird. Dabei gilt: $0 < n_2 < k_2$. In einer besonderen Ausführung gilt:

$0 < n_2 \leq (0{,}4\ k_2)$. In einem Ausführungsbeispiel ist gewählt: $n_2 = (0{,}25\ k_2)$.

Für die Absätze $n_2$ und $n_1$ gilt: $n_1 \leq n_2$. In einer besonderen Ausführung gilt: $n_2 = n_1$.

Jeder Feineinschnitt 25 des Feineinschnittgitters 22 ist dabei jeweils so ausgebildet, dass an dem in Umfangsrichtung U gesehenen Anfang als auch an dem in Umfangsrichtung U gesehenen Ende eines Feineinschnitts 25 jeweils ein Feineinschnitt 26 in den Feineinschnitt 25 mündet.

Die Feineinschnittgitter 22 bilden auf diese Weise ein Gitter aus von durch die Feineinschnitte 25 und 26 gebildeten Gitterlinien mit von den Gitterlinien jeweils umschlossenen Profilblockausschnittselementen 27.

Die Feineinschnittsgitter 22 sind dabei derart in den Profilblockelementen 12 bzw. 13 der Profilblockreihen 8 bzw. 10 angeordnet, dass in Umfangsrichtung U gesehen jeweils vorund hinter dem Feineinschnittsgitter ein feineinschnittsfreier über die gesamte axiale Erstreckung des Profilblockelements 12 bzw. 13 erstreckter Umfangsabschnitt 35 bzw. 37 des Profilblockelements 12 bzw. 13 der Umfangslänge $w_2$ mit $w_2 > 0\text{mm}$ mit einer lamellenfreier Fläche $F_C$ verbleibt, der das Feineinschnittgitter 22 in Umfangsrichtung jeweils von den das jeweilige Profilblockelement 12 bzw. 13 begrenzenden Rillenbereiche 16" bzw. 17" trennt. In einer besonderen Ausführung gilt: $(1{,}15\ k_2) \leq w_2 \leq (1{,}5\ k_2)$

**Bezugszeichenliste**

(Teil der Beschreibung)

| | |
|---|---|
| 1 | Fahrzeugluftreifen |
| 2 | Laufstreifenprofil |
| 3 | Schulterprofilblockreihe |
| 4 | Umfangsrille |
| 5 | Mittenprofilband |
| 6 | Umfangsrille |
| 7 | Schulterprofilblockreihe |
| 8 | Profilblockreihe |
| 9 | Profilrippe |
| 10 | Profilblockreihe |
| 11 | Profilblockelement |
| 12 | Profilblockelement |
| 13 | Profilblockelement |
| 14 | Profilblockelement |
| 15 | Querrille |
| 16 | Querrille |
| 17 | Querrille |
| 18 | Querrille |
| 19 | Querrille |
| 20 | Entkopplungsspalt |
| 21 | Feineinschnittgitter |
| 22 | Feineinschnittgitter |
| 23 | Feineinschnitt |
| 24 | Feineinschnitt |
| 25 | Feineinschnitt |
| 26 | Feineinschnitt |
| 27 | Profilblockauschnittselement |
| 28 | Profilblockausschnittselement |
| 29 | Feineinschnittgitter |
| 30 | Feineinschnitt |
| 31 | Feineinschnitt |
| 32 | Profilblockauschnittselement |
| 33 | Rahmen |
| 34 | Rahmen |
| 35 | Rahmen |
| 36 | Rahmen |
| 37 | Rahmen |
| 38 | Querrille |

**Patentansprüche**

1. Laufstreifenprofil eines Fahrzeugluftreifens - insbesondere eines Winterreifens - mit wenigstens einer über den Umfang des Fahrzeugluftreifens erstreckten Profilblockreihe (3,7,8,10) mit in Umfangsrichtung U hintereinander angeordneten, jeweils durch Querrillen (15,16,17,18,19,38) voneinander getrennten Profilblockelementen (11,12,13,14),
   mit einem in der radial äußeren Oberfläche von Profilblockelementen (11,12,13,14) der Profilblockreihe (3,7,8,10) ausgebildeten gitterförmigen Feineinschnittsystem (21,22),
   mit zwei in der radial äußeren Oberfläche des Profilblockelements (11,12,13,14) ausgebildeten Zonen (33,34,35,37) die sich axial längs der Erstreckung des gitterförmigen Feineinschnittsystems (21,22) über die gesamte axiale Erstreckung des gitterförmigen Feineinschnittsystems (21,22) im Profilblockelement (11,12,13,14) und in Umfangsrichtung zwischen jeweils einer der beiden das Profilblockelement (11,12,13,14) in Umfangsrichtung zu einer Querrille (15,16,17,18,19,38) hin begrenzenden Profilblockelementflanke und dem gitterförmigen Feineinschnittsystem (21,22) über einen in Umfangsrichtung gemessenen Abstand w mit w > 0 mm hin erstrecken, der frei von Feineinschnitten ausgebildet ist,
   **dadurch gekennzeichnet,**
   **dass** in Umfangsrichtung (U) des Fahrzeugluftreifens gesehen jeweils zwei hintereinander angeordnete Profilblok-kelemente (11) einer ersten Profilblockreihe (3) in ihrer Umfangserstreckung einem Profilblockelement (12) einer zweiten Profilblockreihe (8) zugeordnet sind, wobei in der ersten Profilblockreihe (3) in Umfangsrichtung (U) jeweils in alternierender Reihenfolge eine erste Querrille (15) und eine zweite Querrille (38) der ersten Profilblockreihe (3) ausgebildet ist, wobei die erste Querrille (15) in ihrer axialen Verlängerung in eine in der zweiten Profilblockreihe (8) ausgebildeten Querrille (16) übergeht,
   wobei die erste Querrille (15) mit einer senkrecht zu ihrer Erstreckungsrichtung gemessenen Breite - insbesondere konstanten Breite - d und die zweite Querrille (38) mit einer senkrecht zu ihrer Erstreckungsrichtung gemessenen Breite - insbesondere konstanten Breite - e ausgebildet ist,
   wobei für d und e in der radial äußeren Oberfläche des Fahrzeugluftreifens gilt:

$$(0{,}3\ d) \leq e \leq (0.95\ d).$$

2. Laufstreifenprofil gemäß den Merkmalen von Anspruch 1,
   wobei sich das gitterförmige Feineinschnittsystem eines Profilblockelements jeweils über die gesamte axiale Erstreckung des Profilblockelements im Umfangserstreckungsbereich des gitterförmigen Feineinschnittsystems innerhalb der der axialen Erstreckungsbreite TA der Bodenaufstandsfläche des Fahrzeugluftreifens im montierten, belasteten Betriebszustand unter Normbedingungen erstreckt.

3. Laufstreifenprofil gemäß den Merkmalen von einem oder mehreren der vorangegangenen Ansprüche,
   wobei ein oder mehrere der Profilblockelemente einer Profilblockreihe in ihrer radial äußeren Oberfläche mit mehreren - insbesondere mit zwei - in Umfangsrichtung hintereinander angeordnet und von einander beabstandeten gitterförmigen Feineinschnittsystemen ausgebildet sind, mit jeweils einer in Umfangsrichtung zwischen den hintereinander angeordneten gitterförmigen Feineinschnittsystemen ausgebildeten Zone, die sich axial längs der Erstrek-kung des gitterförmigen Feineinschnittsysteme über die gesamte axiale Erstreckung der gitterförmigen Feineinschnittsysteme im Profilblockelement über einen in Umfangsrichtung gemessenen Abstand w mit w > 0 mm hin erstrecken, der frei von Feineinschnitten ausgebildet ist.

4. Laufstreifenprofil gemäß den Merkmalen von einem oder mehreren der vorangegangenen Ansprüche,
   mit mehreren zwischen einer Reifenschulter und der Äquatorebene des Fahrzeugluftreifens jeweils über den Umfang des Fahrzeugluftreifens erstreckten Profilblockreihen mit in Umfangsrichtung U hintereinander angeordneten, jeweils durch Querrillen voneinander getrennten Profilblockelementen,
   bei denen jeweils in der radial äußeren Oberfläche von Profilblockelementen jeder dieser Profilblockreihen ausgebildetem gitterförmigen Feineinschnittsystemen und derartige von Feineinschnitten freien Zonen ausgebildet sind, wobei innerhalb der axialen Erstreckungsbreite TA der Bodenaufstandsfläche des Fahrzeugluftreifens im montierten, belasteten Betriebszustand unter Normbedingungen die Fläche der von Feineinschnitten jeweils freien Zonen in der axial der Reifenschulter nächstgelegenen Profilblockreihe größer als die Fläche der von Feineinschnitten freien Zonen in der axial von der Reifenschulter axial am weitest entfernt gelegenen Profilblockreihe ausgebildet ist.

5. Laufstreifenprofil gemäß den Merkmalen von einem oder mehreren der Ansprüche 1 bis 3,

mit mehreren zwischen einer Reifenschulter und der Äquatorebene des Fahrzeugluftreifens jeweils über den Umfang des Fahrzeugluftreifens erstreckten Profilblockreihen mit in Umfangsrichtung U hintereinander angeordneten, jeweils durch Querrillen voneinander getrennten Profilblockelementen,

bei denen jeweils in der radial äußeren Oberfläche von Profilblockelementen jeder dieser Profilblockreihen ausgebildetem gitterförmigen Feineinschnittsystemen und derartige von Feineinschnitten freien Zonen ausgebildet sind, wobei innerhalb der axialen Erstreckungsbreite TA der Bodenaufstandsfläche des Fahrzeugluftreifens im montierten, belasteten Betriebszustand unter Normbedingungen die Fläche der von Feineinschnitten jeweils freien Zonen in einer axial der Reifenschulter näher gelegenen ersten Profilblockreihe jeweils größer als die Fläche der von Feineinschnitten freien Zonen in der axial weiter innen liegenden zur ersten Profilblockreihe benachbarten Profilblockreihe ausgebildet ist.

**6.** Laufstreifenprofil gemäß den Merkmalen von Anspruch 5,
wobei die erste Profilblockreihe eine Schulterprofilblockreihe ist,
wobei die zweite Profilblockreihe eine axial zur Schulterprofilblockreihe unmittelbar benachbarte von der Schulterprofilblockreihe durch eine über den gesamten Umfang des Fahrzeugluftreifens erstreckt ausgebildete Umfangsrille axial beabstandete Profilblockreihe ist.

**7.** Laufstreifenprofil gemäß den Merkmalen von Anspruch 6,
wobei die feineinschnittsfreien Zonen der Profilblockelemente der ersten Profilblockreihe eine Fläche $F_C$ innerhalb der axialen Erstreckungsbreite TA der Bodenaufstandsfläche des Fahrzeugluftreifens im montierten, belasteten Betriebszustand unter Normbedingungen und die feineinschnittsfreien Zonen der Profilblockelemente der zweiten Profilblockreihe eine Fläche $F_D$ aufweisen, wobei für $F_C$ und $F_D$ gilt: $(0,9\,F_C) < F_D < (1,7\,F_C)$.

**8.** Laufstreifenprofil gemäß den Merkmalen von einem oder mehreren der Ansprüche 4 bis 7,
wobei innerhalb der axialen Erstreckungsbreite TA der Bodenaufstandsfläche des Fahrzeugluftreifens im montierten, belasteten Betriebszustand unter Normbedingungen die axiale Erstreckungsbreite der axial zur außen zur Reifenschulter hin ausgebildeten Profilblockreihe größer als die axiale Erstreckungsbreite der axial weiter von der Reifenschulter entfernt angeordneten Profilblockreihe ist.

**9.** Laufstreifenprofil gemäß den Merkmalen von Anspruch 6 oder 7,
wobei benachbart zur zweiten Profilblockreihe in axial von der ersten Profilblockreihe wegweisenden Richtung eine über den Umfang des Fahrzeugluftreifens erstreckt ausgebildete Profilrippe (9) ausgebildet ist, die an ihrer radial äußeren Oberfläche insbesondere mit einem gitterförmigen Feineinschnittsystem ausgebildet ist.

**10.** Laufstreifenprofil gemäß den Merkmalen von Anspruch 9,
wobei innerhalb der axialen Erstreckungsbreite TA der Bodenaufstandsfläche des Fahrzeugluftreifens im montierten, belasteten Betriebszustand unter Normbedingungen für die axiale Erstreckungsbreite C der ersten Profilblockreihe, für die axiale Erstreckungsbreite D der zweiten Profilblockreihe und für die axiale Erstreckungsbreite B der Profilrippe (9) gilt:

$$D > C > B \text{ mit insbesondere } B \leq (0{,}18\,TA)$$

**11.** Laufstreifenprofil gemäß den Merkmalen von Anspruch 9 oder 10,
wobei zwischen den Profilblockelementen (12) der zweiten Profilblockreihe (8) und der Profilrippe (9) ein erster Rillenabschnitt (16') einer Rille (16) ausgebildet ist, der die Profilrippe (9) axial vom Profilblockelement (12) trennt, der unter Einschluss eines Winkels ($\gamma$) zur Axialen des Fahrzeugluftreifens erstreckt verlaufend ausgebildet ist, und unter Ausbildung eines Knickes in axiale Richtung zu der eine Schulterprofilblockreihe bildenden ersten Profilblockreihe (3) in einen zweiten Rillenabschnitt (16") der Rille (16) übergeht, der das Profilblockelement (12) von dem in Umfangsrichtung nach geordneten Profilblockelement (12) der Profilblockreihe (8) trennt, wobei der zweiten Rillenabschnitt (16") der Rille (16) unter Einschluss eines Winkels ($\beta$) zur Axialen des Fahrzeugluftreifens erstreckt verlaufend ausgebildet ist.

**12.** Laufstreifenprofil gemäß den Merkmalen von Anspruch 11,
wobei die erste eine Schulterprofilblockreihe bildende Profilblockreihe (3) und die axial benachbarte zweite Profilblockreihe (8) durch eine in Umfangrichtung (U) des Fahrzeugluftreifens über den gesamten Umfang des Fahrzeugluftreifens erstreckt ausgebildete Umfangsrille (4) axial getrennt ist, wobei die Umfangsrille (4) mit einem in Umfangsrichtung zickzack-förmigem Verlauf ausgebildet ist.

**13.** Laufstreifenprofil gemäß den Merkmalen von Anspruch 11 oder 12,
wobei der erste Rillenabschnitt (16') der Rille (16) in ihrer senkrecht zu ihrer Erstreckungsrichtung gemessenen Breite ausgehend von einer Breite a längs ihrer Erstreckung bis zu einer Breite b an der Knickstelle - insbesondere linear - zunimmt, wobei der zweite Rillenabschnitt (16") der Rille (16) in ihrer senkrecht zu ihrer Erstreckungsrichtung gemessenen Breite mit konstanter Breite b längs ihrer Erstreckung ausgebildet ist, wobei für die Breiten a, b und c gilt:

$$a < b \leq c, \text{ wobei insbesondere } (1{,}2\ a) \leq b \leq (2{,}3\ a).$$

**14.** Laufstreifenprofil gemäß den Merkmalen von einem oder mehreren der vorangegangenen Ansprüche,
wobei das Laufstreifenprofil laufrichtungsgebunden ausgebildet ist.

## Claims

**1.** Tread profile of a vehicle pneumatic tyre, in particular of a snow tyre,
having at least one profile block row (3,7,8,10) extending over the circumference of the vehicle pneumatic tyre with profile block elements (11,12,13,14) arranged in succession in the circumferential direction U and in each case separated from one another by transverse grooves (15,16,17,18,19,38),
having a grid-type system of fine incisions (21,22) formed in the radially outer surface of profile block elements (11,12,13,14) of the profile block row (3,7,8,10),
having two zones (33,34,35,37) formed in the radially outer surface of the profile block element (11,12,13,14) which extend axially along the extension of the grid-type system of fine incisions (21,22) over the entire axial extension of the grid-type system of fine incisions (21,22) in the profile block element (11,12,13,14) and in the circumferential direction between in each case one of the two profile block element flanks defining the profile block element (11,12,13,14) in the circumferential direction relative to a transverse groove (15,16,17,18,19,38) and the grid-type system of fine incisions (21,22) over a distance w, with w > 0 mm, measured in the circumferential direction which is free of fine incisions,
**characterized in that,**
when viewed in the circumferential direction (U) of the vehicle pneumatic tyre, in each case two successively arranged profile block elements (11) of a first profile block row (3) are associated in their circumferential extension with one profile block element (12) of a second profile block row (8), wherein in each case a first transverse groove (15) and a second transverse groove (38) of the first profile block row (3) are formed in alternating sequence in the first profile block row (3) in the circumferential direction (U),
wherein the first transverse groove (15) develops in its axial prolongation into a transverse groove (16) formed in the second profile block row (8), wherein the first transverse groove (15) has a width, in particular a constant width, d measured perpendicularly to its direction of extension and the second transverse groove (38) has a width, in particular a constant width, e measured perpendicularly to its direction of extension,
wherein the following applies for d and e in the radially outer surface of the vehicle pneumatic tyre:

$$(0.3\ d) \leq e \leq (0.95\ d).$$

**2.** Tread profile according to the features of Claim 1,
wherein the grid-type system of fine incisions of a profile block element extends in each case over the entire axial extension of the profile block element in the circumferential area of extension of the grid-type system of fine incisions within the axial width of extension TA of the ground contact area of the vehicle pneumatic tyre in the mounted, loaded operating state under standard conditions.

**3.** Tread profile according to the features of one or more of the preceding claims,
wherein one or more of the profile block elements of a profile block row is/are formed in the radially outer surface thereof with a plurality, in particular with two, grid-type systems of fine incisions arranged in succession in the circumferential direction and spaced from one another, with in each case a zone formed between the successive grid-type systems of fine incisions in the circumferential direction, which zones extend axially along the extension of the grid-type systems of fine incisions over the entire axial extension of the grid-type systems of fine incisions in the profile block element over a distance w, with w > 0 mm, measured in the circumferential direction which is free of fine incisions.

4. Tread profile according to the features of one or more of the preceding claims,
   having a plurality of profile block rows extending between a tyre shoulder and the equatorial plane of the vehicle pneumatic tyre in each case over the circumference of the vehicle pneumatic tyre with profile block elements arranged in succession in the circumferential direction U and in each case separated from one another by transverse grooves, in which grid-type systems of fine incisions and such zones free of fine incisions are formed in each case in the radial outer surface of profile block elements of each of these profile block rows,
   wherein, within the axial width of extension TA of the ground contact area of the vehicle pneumatic tyre in the mounted, loaded operating state under standard conditions, the area of the zones in each case free of fine incisions in the profile block row axially closest to the tyre shoulder is larger than the area of the zones free of fine incisions in the profile block row axially furthest away from the tyre shoulder.

5. Tread profile according to the features of one or more of Claims 1 to 3,
   having a plurality of profile block rows extending between a tyre shoulder and the equatorial plane of the vehicle pneumatic tyre in each case over the circumference of the vehicle pneumatic tyre with profile block elements arranged in succession in the circumferential direction U and in each case separated from one another by transverse grooves, in which grid-type systems of fine incisions and such zones free of fine incisions are formed in each case in the radially outer surface of profile block elements of each of these profile block rows,
   wherein, within the axial width of extension TA of the ground contact area of the vehicle pneumatic tyre in the mounted, loaded operating state under standard conditions, the area of the zones in each case free of fine incisions in a first profile block row positioned axially closer to the tyre shoulder is larger than the area of the zones free of fine incisions in the axially further inward profile block row adjacent the first profile block row.

6. Tread profile according to the features of Claim 5,
   wherein the first profile block row is a shoulder profile block row,
   wherein the second profile block row is a profile block row axially immediately adjacent the shoulder profile block row and axially spaced from the shoulder profile block row by a circumferential groove extending over the entire circumference of the vehicle pneumatic tyre.

7. Tread profile according to the features of Claim 6,
   wherein the fine-incision-free zones of the profile block elements of the first profile block row comprise an area $F_C$ within the axial width of extension TA of the ground contact area of the vehicle pneumatic tyre in the mounted, loaded operating state under standard conditions and the fine-incision-free zones of the profile block elements of the second profile block row comprise an area $F_D$, wherein the following applies for $F_C$ and $F_D$: $(0.9\,F_C) < F_D < (1.7\,F_C)$.

8. Tread profile according to the features of one or more of Claims 4 to 7,
   wherein, within the axial width of extension TA of the ground contact area of the vehicle pneumatic tyre in the mounted, loaded operating state under standard conditions, the axial width of extension of the profile block row formed axially to the outside towards the tyre shoulder is greater than the axial width of extension of the profile block row formed axially further away from the tyre shoulder.

9. Tread profile according to the features of Claim 6 or 7,
   wherein a profile rib (9) extending over the circumference of the vehicle pneumatic tyre is formed adjacent the second profile block row in the direction pointing axially away from the first profile block row, which profile rib is provided at its radially outer surface in particular with a grid-type system of fine incisions.

10. Tread profile according to the features of Claim 9,
    wherein, within the axial width of extension TA of the ground contact area of the vehicle pneumatic tyre in the mounted, loaded operating state under standard conditions, the following applies for the axial width of extension C of the first profile block row, for the axial width of extension D of the second profile block row and for the axial width of extension B of the profile rib (9):

$$\texttt{D > C > B with in particular B} \leq \texttt{(0.18 TA)}$$

**11.** Tread profile according to the features of Claim 9 or 10,
wherein a first groove portion (16') of a groove (16) is formed between the profile block elements (12) of the second profile block row (8) and the profile rib (9), which first groove portion separates the profile rib (9) axially from the profile block element (12) and which extends so as to form an angle ($\gamma$) with the axis of the vehicle pneumatic tyre and develops, by bending into the axial direction towards the first profile block row (3) forming a shoulder profile block row, into a second groove portion (16") of the groove (16), which separates the profile block element (12) from the profile block element (12) arranged thereafter in the circumferential direction of the profile block row (8),
wherein the second groove portion (16") of the groove (16) extends so as to form an angle ($\beta$) with the axis of the vehicle pneumatic tyre.

**12.** Tread profile according to the features of Claim 11,
wherein the first profile block row (3) forming a shoulder profile block row and the axially adjacent second profile block row (8) are axially separated by a circumferential groove (4) extending in the circumferential direction (U) of the vehicle pneumatic tyre over the entire circumference of the vehicle pneumatic tyre, wherein the circumferential groove (4) follows a zigzag-shaped course in the circumferential direction.

**13.** Tread profile according to the features of Claim 11 or 12,
wherein the first groove portion (16') of the groove (16) increases, in particular in linear manner, in its width measured perpendicularly to its direction of extension from an initial width a along its extension to a width b at the bend point,
wherein the second groove portion (16") of the groove (16) is formed in its width measured perpendicularly to its direction of extension with a constant width b along its extension,
wherein the following applies for the widths a, b and c:

$$a < b \leq c, \text{ wherein in particular } (1.2\ a) \leq b \leq (2.3\ a).$$

**14.** Tread profile according to the features of one or more of the preceding claims,
wherein the tread profile is formed in a manner linked with direction of travel.

**Revendications**

**1.** Profil de bande de roulement d'un pneumatique d'un véhicule - en particulier d'un pneu neige - avec au moins une rangée de blocs profilés (3, 7, 8, 10) s'étendant sur la circonférence du pneumatique de véhicule, avec des éléments de bloc profilé (11, 12, 13, 14) disposés les uns derrière les autres dans la direction circonférentielle U et séparés les uns des autres par des gorges transversales (15, 16, 17, 18, 19, 38),
avec un système de fines entailles (21, 22) en forme de réseau réalisées dans la surface radialement extérieure des éléments de bloc profilé (11, 12, 13, 14) de la rangée de blocs profilés (3, 7, 8, 10),
avec deux zones (33, 34, 35, 37) réalisées dans la surface radialement extérieure de l'élément de bloc profilé (11, 12, 13, 14), qui s'étendent axialement le long de l'étendue du système de fines entailles (21, 22) en forme de réseau sur toute l'étendue axiale du système de fines entailles (21, 22) en forme de réseau dans l'élément de bloc profilé (11, 12, 13, 14), et dans la direction circonférentielle entre à chaque fois l'un des flancs de l'élément de bloc profilé limitant l'élément de bloc profilé (11, 12, 13, 14) dans la direction circonférentielle jusqu'à une gorge transversale (15, 16, 17, 18, 19, 38), et le système de fines entailles (21, 22) en forme de réseau, sur une distance w mesurée dans la direction circonférentielle, avec w > 0 mm, qui est exempte de fines entailles,
**caractérisé en ce que**
dans la direction circonférentielle (U) du pneumatique de véhicule, à chaque fois deux éléments de bloc profilé (11) disposés l'un derrière l'autre d'une première rangée de blocs profilés (3) sont associés dans leur étendue circonférentielle à un élément de bloc profilé (12) d'une deuxième rangée de blocs profilés (8), et dans la première rangée de blocs profilés (3), dans la direction circonférentielle (U), à chaque fois une première gorge transversale (15) et une deuxième gorge transversale (38) de la première rangée de blocs profilés (3) étant réalisées en alternance, la première gorge transversale (15) se prolongeant dans son prolongement axial par une gorge transversale (16) réalisée dans la deuxième rangée de blocs profilés (8), la première gorge transversale (15) étant réalisée avec une largeur d mesurée perpendiculairement à sa direction d'étendue et notamment constante, et la deuxième gorge transversale (38) étant réalisée avec une largeur e mesurée perpendiculairement à sa direction d'étendue et notamment constante,

les valeurs pour d et e, dans la surface radialement extérieure du pneumatique du véhicule étant définies comme suit :

$$(0,3 \ d) \leq e \leq (0,95 \ d).$$

2. Profil de bande de roulement selon les caractéristiques de la revendication 1,
dans lequel le système de fines entailles en forme de réseau d'un élément de bloc profilé s'étend à chaque fois sur toute l'étendue axiale de l'élément de bloc profilé dans la région d'étendue circonférentielle du système de fines entailles en forme de réseau à l'intérieur de la largeur de l'étendue axiale TA de la surface d'appui au sol du pneumatique du véhicule dans l'état de fonctionnement monté et en charge, dans les conditions normales.

3. Profil de bande de roulement selon les caractéristiques de l'une quelconque ou plusieurs des revendications précédentes,
dans lequel un ou plusieurs des éléments de bloc profilé d'une rangée de blocs profilés sont réalisés dans leur surface radialement extérieure avec plusieurs - en particulier deux - systèmes de fines entailles en forme de réseau disposés les uns derrière les autres dans la direction circonférentielle et espacés les uns des autres, avec à chaque fois une zone réalisée dans la direction circonférentielle entre les systèmes de fines entailles en forme de réseau disposés les uns derrière les autres, qui s'étend, axialement le long de l'étendue des systèmes de fines entailles en forme de réseau sur toute l'étendue axiale des systèmes de fines entailles en forme de réseau dans l'élément de bloc profilé sur une distance w mesurée dans la direction circonférentielle, avec w > 0 mm, qui est exempte de fines entailles.

4. Profil de bande de roulement selon les caractéristiques de l'une quelconque ou plusieurs des revendications précédentes,
comprenant plusieurs rangées de blocs profilés s'étendant entre un épaulement de pneumatique et le plan d'équateur du pneumatique du véhicule à chaque fois sur la circonférence du pneumatique du véhicule, avec des éléments de bloc profilé disposés les uns derrière les autres dans la direction circonférentielle U à chaque fois séparés les uns des autres par des gorges transversales, dans lesquels à chaque fois dans la surface radialement extérieure d'éléments de bloc profilé de chacune de ces rangées de blocs profilés sont réalisés des systèmes de fines entailles en forme de réseau et de telles zones exemptes de fines entailles,
et à l'intérieur de la largeur de l'étendue axiale TA de la surface d'appui au sol du pneumatique du véhicule dans l'état de fonctionnement monté et en charge, dans les conditions normales, la surface des zones à chaque fois exemptes de fines entailles dans la rangée de blocs profilés la plus proche de l'épaulement du pneumatique étant supérieure à la surface des zones exemptes de fines entailles dans la rangée de blocs profilés la plus éloignée axialement de l'épaulement du pneumatique.

5. Profil de bande de roulement selon les caractéristiques de l'une quelconque ou plusieurs des revendications 1 à 3,
comprenant plusieurs rangées de blocs profilés s'étendant entre un épaulement de pneumatique et le plan d'équateur du pneumatique du véhicule à chaque fois sur la circonférence du pneumatique du véhicule, avec des éléments de bloc profilé disposés les uns derrière les autres dans la direction circonférentielle U à chaque fois séparés les uns des autres par des gorges transversales, dans lesquels à chaque fois dans la surface radialement extérieure d'éléments de bloc profilé de chacune de ces rangées de blocs profilés sont réalisés des systèmes de fines entailles en forme de réseau et de telles zones exemptes de fines entailles,
et à l'intérieur de la largeur de l'étendue axiale TA de la surface d'appui au sol du pneumatique du véhicule dans l'état de fonctionnement monté et en charge, dans les conditions normales, la surface des zones à chaque fois exemptes de fines entailles dans une première rangée de blocs profilés axialement rapprochée de l'épaulement du pneumatique est à chaque fois supérieure à la surface des zones exemptes de fines entailles dans la rangée de blocs profilés adjacente située axialement davantage vers l'intérieur par rapport à la première rangée de blocs profilés.

6. Profil de bande de roulement selon les caractéristiques de la revendication 5, dans lequel la première rangée de blocs profilés est une rangée de blocs profilés d'épaulement,
la deuxième rangée de blocs profilés est une rangée de blocs profilés axialement directement adjacente à la rangée de blocs profilés d'épaulement, espacée axialement de la rangée de blocs profilés d'épaulement par une gorge circonférentielle s'étendant sur toute la circonférence du pneumatique du véhicule.

7. Profil de bande de roulement selon les caractéristiques de la revendication 6,

dans lequel les zones exemptes de fines entailles des éléments de bloc profilé de la première rangée de blocs profilés présentent une surface $F_C$ à l'intérieur de la largeur d'étendue axiale TA de la surface d'appui au sol du pneumatique du véhicule dans l'état monté en charge dans les conditions normales, et les zones exemptes de fines entailles des éléments de bloc profilé de la deuxième rangée de blocs profilés présentent une surface $F_D$ et l'on a la relation suivante entre $F_C$ et $F_D$ : $(0,9\,F_C) < F_D < (1,7\,F_C)$.

8. Profil de bande de roulement selon les caractéristiques de l'une quelconque ou plusieurs des revendications 4 à 7, dans lequel, à l'intérieur de la largeur de l'étendue axiale TA de la surface d'appui au sol du pneumatique du véhicule, dans l'état de fonctionnement monté en charge, dans les conditions normales, la largeur de l'étendue axiale de la rangée de blocs profilés réalisée axialement vers l'extérieur vers l'épaulement du pneumatique est plus grande que la largeur de l'étendue axiale de la rangée de blocs profilés disposée axialement plus loin de l'épaulement du pneumatique.

9. Profil de bande de roulement selon les caractéristiques des revendications 6 ou 7, dans lequel, à côté de la deuxième rangée de blocs profilés, dans la direction opposée axialement à la première rangée de blocs profilés, est réalisée une nervure profilée (9) s'étendant sur la circonférence du pneumatique du véhicule, qui est réalisée sur sa surface radialement extérieure en particulier avec un système de fines entailles en forme de réseau.

10. Profil de bande de roulement selon les caractéristiques de la revendication 9, dans lequel, à l'intérieur de la largeur de l'étendue axiale TA de la surface d'appui au sol du pneumatique du véhicule, dans l'état de fonctionnement monté en charge, dans les conditions normales, on a, pour la largeur de l'étendue axiale C de la première rangée de blocs profilés, pour la largeur de l'étendue axiale D de la deuxième rangée de blocs profilés et pour la largeur de l'étendue axiale B de la nervure profilée (9) :

$$D > C > B, \text{ avec notamment } B \leq (0,18\ TA).$$

11. Profil de bande de roulement selon les caractéristiques de la revendication 9 ou 10, dans lequel une première portion de gorge (16') d'une gorge (16) est réalisée entre les éléments de bloc profilé (12) de la deuxième rangée de blocs profilés (8) et la nervure profilée (9), laquelle portion de gorge (16') sépare la nervure profilée (9) axialement de l'élément de bloc profilé (12), qui s'étend en formant un angle ($\gamma$) par rapport à la direction axiale du pneumatique du véhicule, et qui se prolonge par une deuxième portion de gorge (16") de la gorge (16) en formant un coude dans la direction axiale par rapport à la première rangée de blocs profilés (3) formant une rangée de blocs profilés d'épaulement, la deuxième portion de gorge (16") séparant l'élément de bloc profilé (12) de l'élément de bloc profilé (12) suivant dans la direction circonférentielle de la rangée de blocs profilés (8), la deuxième portion de gorge (16") de la gorge (16) s'étendant en formant un angle ($\beta$) par rapport à la direction axiale du pneumatique du véhicule.

12. Profil de bande de roulement selon les caractéristiques de la revendication 11, dans lequel la première rangée de blocs profilés (3) formant une rangée de blocs profilés d'épaulement et la deuxième rangée de blocs profilés axialement adjacente (8) sont séparées axialement par une gorge circonférentielle (4) s'étendant dans la direction circonférentielle (U) du pneumatique du véhicule sur toute la circonférence du pneumatique du véhicule, la gorge circonférentielle (4) étant réalisée avec une forme en zigzag dans la direction circonférentielle.

13. Profil de bande de roulement selon les caractéristiques de la revendication 11 ou 12, dans lequel la première portion de gorge (16') de la gorge (16), dans sa largeur mesurée perpendiculairement à sa direction d'étendue, augmente depuis une largeur a le long de son étendue jusqu'à une largeur b au niveau du point d'inflexion - en particulier linéairement, la deuxième portion de gorge (16") de la gorge (16) étant réalisée, dans sa largeur mesurée perpendiculairement à sa direction d'étendue, avec une largeur b le long de son étendue, et l'on a, pour les largeurs a, b et c, la relation suivante :

$$a < b \leq c, \text{ et en particulier } (1,2a) \leq b \leq (2,3a).$$

14. Profil de bande de roulement selon les caractéristiques de l'une quelconque des revendications précédentes,

dans lequel le profilé de bande de roulement est réalisé sous forme liée à la direction d'avance.

# FIG. 1

FIG. 2

EP 1 798 065 B1

# FIG. 3a

# FIG. 4a

# FIG. 3b

# FIG. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 402181 B